# EUROPEAN PATENT APPLICATION

(11) **EP 4 831 000 A1**
(43) Date of publication of application: **28.10.2026**
(21) Application number: 25171853.2
(22) Date of filing: 23.04.2025
(51) Int. Cl.: B60Q 1/26, B60R 13/04, F21S 43/20, F21S 43/50, F21S 43/00, F21V 9/00, B60R 19/50, F21W 104/00, B32B 3/26, B32B 7/023, F21V 11/18

(54) **ILLUMINATED OR ILLUMINABLE COMPONENT AND VEHICLE COMPRISING SUCH A COMPONENT**

(71) Applicant: HELLA Saturnus Slovenija d.o.o., 1001 Ljubljana (SI)
(72) Inventor: Bajec Strle, Alenka, 1000 Ljubljana (SI); Virsek, Marko, 1290 Grosuplje (SI); Tekavcic, Andraz, 4000 Kranj (SI); Krumpak, Matjaz, 1000 Ljubljana (SI); Licen, Matjaz, 1000 Ljubljana (SI); Zavodnik, Vid, 1261 Ljubljana-Dobrunje (SI); Peterman, Tomaz, 4240 Radovljica (SI)
(74) Representative: Behr-Wenning, Gregor

(57) **Abstract**

The present invention relates to an illuminated or illuminable component (34), comprising one or more light sources (26) for providing light, a carrier body (14) having a first surface (16) and a second surface (18) opposite the first surface (16), the first surface (16) facing the light source (26), or being the surface on which the light provided by the light source (26) first impinges before penetrating the carrier body (14), a structural color layer (36) comprising a physical structure influencing the color of the light interacting with the structural color layer and applied to the first surface (16) and/or the second surface (18) or arranged inside the component (34) such that the light generated by the light source (26) interacts with the structural color layer (36) before penetrating the carrier body (14).

Moreover, the present invention relates to a vehicle (12), comprising such an illuminated or illuminable component (34)

## Description

The present invention relates to an illuminated or illuminable component and to a vehicle comprising such a component.

### PRIOR ART

An increasing number of modern vehicles are equipped with illuminated or illuminable components. Such components such as bumpers or illumination panels often need to be illuminated in particular colors to meet legal requirements. A common trend in modern automotive light design is "hidden-until-lit" lighting, where light is emitted through a semi-transparent cover unit. In such cases, the material of the cover unit itself can be tinted, the cover unit can be painted in a specific color (typically to match the color of the rest of the vehicle), may have a metal look (either through application of a metal- look foil, PVD, or by other processes), or some other layer is applied to the cover unit to achieve a specific look.

All such layers can induce a significant color shift when light is passing through the cover unit, which needs to be corrected. Because of variation in the materials used for the cover units and tight restrictions on allowed emitted light colors from manufacturers, a light source with a fixed emission spectrum in many cases cannot achieve the required output color.

One way of correcting the color shift could be to employ two or more, typically three or four light sources of different color, for example red-green-blue RGB-LEDs (light-emitting diodes). The color shift caused by the layers mentioned above needs to be known. The different light sources are controlled such that by mixing they provide light of a color that after the color shift leads to the desired color. For this purpose, the color bins of the uses LEDs must be narrow. A color bin is a region or range in the color space defined by LED manufacturers. After production, the LEDs are measured and sorted into regions (or bins) and the customers can specify which bin they would like, in particular, how small the range in the color space should be. When mixing, the brightness of the bins must also be narrow which leads to increasing costs and low efficiency.

It is one task of one embodiment of the present invention to present an illuminated or illuminable component by which the drawbacks previously mentioned can at least be minimized. In particular, an illuminated or illuminable component should be proposed that is easy to manufacture and by which the light source can be operated with increased efficiency compared to illuminated or illuminable components known from the prior art.

Furthermore, an embodiment of the present invention has the object to provide a vehicle that can be equipped with such a component.

The task is solved by the features specified in claims 1 and 18. Advantageous embodiments are the subject of the dependent claims.

According to one aspect of the present invention an illuminated or illuminable component comprises
- one or more light sources for providing light,
- a carrier body having a first surface and a second surface opposite the first surface,
- the first surface
   ∘ facing the light source, or
   ∘ being the surface on which the light provided by the light source first impinges before penetrating the carrier body, and
- a structural color layer comprising a physical structure influencing the color of the light interacting with the structural color layer and
   ∘ applied to the first surface and/or the second surface or
   ∘ arranged inside the component such that the light generated by the light source interacts with the structural color layer before penetrating the carrier body.

The physical structure may be embedded into the structural color layer by a certain matrix. The physical structure can for example comprise photonic crystals which have a quasi-periodic structure with structures on the scale of the wavelength of light, with varying refractive index. The photonic crystals reflect specific wavelengths and absorb or transmit the rest. The unlit state of the surface of the structural color layer comprises a first color which is obtained by the reflected ambient light. In lit state, the surface of the structural color layer appears in a second color which is determined by the light generated by the light source and may be influenced by color pigments or the like embedded into the structural layer which is, however, not strictly necessary.

In contrast to that, the color of the transmitted light does not adopt the second color of the reflected light but is not or only minimally shifted away from the first color. This color shift can easily be compensated with selecting the right color bin of LED light sources without the need of light mixing, thereby increasing the efficiency of the operation of the light source.

According to another embodiment the component comprises an at least partially light absorbing layer which is applied on the structural color layer or vice versa. Alternatively, the light absorbing layer interacts with the structural color layer. The term "interacting" refers to the effects the light absorbing layer and the structural color layer exert on the light provided by the light source and the visibility from outside.

Typically, this light absorbing layer is applied on the illuminated surface of the structural color layer, which is, depending on the application, not strictly necessary. The light absorbing layer can be provided as a black layer which provides maximum absorption. As mentioned earlier, the structural color layer may comprise color pigments of a given color. This color could be the color of the surrounding areas of the component and in particular the color of the vehicle to which the component is mounted. This color is visible from outside as long as the light source is switched off. The higher the absorption of the absorbing layer, the closer to the color provided by the structural color is the color of the component that is visible from outside.

In a further embodiment
- the light absorbing layer or
- the structural color layer and the light absorbing layer comprise openings illuminated or illuminable by the light provided by the light source.

As mentioned above, it is beneficial to provide the light absorbing layer with a maximal degree of absorption. However, at a maximal degree of absorption, the light absorbing layer becomes opaque for the light generated by the light source. When providing openings in the light absorbing layer, the light generated by the light source can penetrate through the light absorbing layer even at maximal degree of absorption. The openings can be embodied as channels with small diameter such that the light source or other components of the component are not visible from outside.

The openings are small so that only a small amount of the ambient light enters the openings and illuminates the interior of the component. The appearance of the color of the structural layer is different from the color of the absorption layer. When the structural layer is located on the openings, the openings are not visible in the off-state.

In another embodiment a shutter body is provided
- on which the light absorbing layer is applied or which is formed by the light absorbing layer or which is made of a light absorbing material, and
- which is movable by a moving mechanism between
   ∘ a first position in which the shutter body is arranged adjacent to or in contact with the openings and
   ∘ a second position in which light provided by the light source can penetrate the openings.

In this embodiment, the openings are opened or closed for the light generated by the light source depending on the position of the shutter body. In the first position, the shutter body absorbs the light which could otherwise be reflected.. Since the reflected light would illuminate the openings, the appearance of the openings in the off-state will change which would be detrimental for the "hidden-until-lit-look".

Moreover, as it is possible to locate the light absorbing layer close to the openings in the first position, a homogeneous appearance from outside the component is obtained even if the openings are of larger scale. The entire shutter body may be formed by the absorbing layer which is then sufficiently thick to provide the required rigidity. Alternatively, the shutter body can be made of a material on which the light absorbing layer is applied.

A further embodiment the shutter body is rotatably supported in the component and can be rotated between the first position and the second position. The shutter body can be provided with different functions which can be activated depending on the rotational position of the shutter body according to this embodiment. For example, the light absorbing layer can be located on one surface or surface section of the shutter body while another layer can be arranged on another surface or surface section. Depending on the rotational position of the shutter body, the one or the other layer and its respective functions are activated.

According to another embodiment the structural color layer comprises color pigments or an ink. As mentioned earlier, it may be desirable to provide the structural color layer with a certain color on the illuminated side. In this embodiment, this color can be obtained by the color pigments or the ink. The color can be similar to or match the one of the surrounding areas of the component such that color harmonization can be achieved.

According to another embodiment the structural color layer comprises at least a first section of a first color and at least a second section of a second color. The first section and the second section may be provided on the same surface to which the same light source is associated. Alternatively, the first section and the second section may be arranged on separate surfaces to which an individual light source preferably of different color is associated. In this embodiment, the component can be provided with sections of different colors when the light source is turned off but at the same time providing light of the required color. As an example, the component may comprise an area that appears green surrounded by a blue frame but can be used as a direction indicator as the light source provides light of amber color. This embodiment offers various styling options.

In a further embodiment the light absorbing layer comprises an absorption adjustment unit and/or an intensity adjustment unit. It may also be possible that the light absorbing layer is formed by the absorption adjustment unit and/or by the intensity adjustment unit. By means of the absorption adjustment unit, the translucence of areas can be defined and thus the absorption of which can be changed. If at maximal absorption, the component appears in the color of the structural color layer from the outside, while at minimal absorption, i.e., transparent or almost transparent, the component appears almost in the color of the light provided by the light source. The absorption adjustment unit may be embodied as a switchable glass unit, sometimes also referred to as "smart glass", whereas the intensity adjustment unit may comprise OLEDs (organic light emitting diodes), AMOLEDs (active matrix organic light emitting diodes) or miniLEDs which may be embedded into the light absorbing layer. In case of a switchable glass unit, the switchable glass unit and the light source may be simultaneously switched on and off. For this purpose, the illuminated or illuminable component is equipped with a power supply and a switching element for turning on and off the power supply. The absorption is changed by turning the switchable glass unit on or off.

In case of OLEDs, AMOLEDs and mini-LEDs, one or more light sources are incorporated into the light absorbing layer. The intensity of the light provided by the OLEDs, AMOLEDs and mini-LEDs can be adjusted. Moreover, the OLEDs, AMOLEDs and mini-LEDs may also be switched-off.

In another embodiment the absorption adjustment unit and the structural color layer are arranged inside the component such that they are flush with or overlap the openings. In this embodiment, the area covered by the absorption adjustment unit and the associated costs can be kept low.

A further embodiment the component comprises a light guide
- into which the light provided by the light source can be coupled and
- comprising outcoupling elements which are arranged such that the light is leaving the light guide via the outcoupling elements.

The use of a light guide facilitates the positioning of the light source as it can be located remote from the component. The depth of the component can be reduced, and the light appearance improved when using light guides.

According to another embodiment the carrier body is a cover lens made of transparent resin. In this embodiment, the carrier body may be provided with particular optical effects which may add to the homogeneity of the illumination of the component. Optical effects can be obtained by an additional diffusive layer, graining and the like.

According to another embodiment a diffusive layer is arranged such that the light generated by the light source interacts with the diffusive layer before penetrating the carrier body. In particular, the diffusive layer can be arranged between the light source and the carrier body. The diffusive layer helps hide the light source in particular when turned off while it also broadens the viewing angle of the illuminated part of the component. Further, the diffusive layer improves the uniformity of the illuminated surface.

In a further embodiment an anti-reflective layer is arranged on the first surface of the carrier layer or on the structural color layer. The anti-reflective layer reduces the reflections of the ambient light which would otherwise negatively affect the hidden appearance in the off state.

In another embodiment, a low-refractive index layer is arranged at least between the carrier body and the light guide. Preferably, the low-refractive index layer is applied on the structural color layer, however, other arrangements are possible. In particular, more than one low-refractive index layers may be provided. When a light guide is employed, gaps are typically needed between the light guide and the adjacently arranged layers of the component. When using a low-refractive index layer, such gaps may be avoided and total internal reflection conditions in the light guide can be preserved. If gaps are still present, the low-refractive index layer reduces additional reflections in the gaps to some degree. Moreover, the carrier body may be replaced by a layer of PUR (polyurethane) or hard-coat. The thickness of the component can be reduced.

In another embodiment an illumination optics is arranged between the light source and the carrier body. One typical embodiment of an illumination optics could be a collimating lens by which the rays of the light provided by the light source are directed towards the outcoupling areas. Another embodiment may be a collection lens. Another embodiment might be a freeform lens, illuminating only selected part of the carrier body. The illumination optics add to the homogeneity and brightness of the illumination of the component.

According to another embodiment a housing is connected to the carrier layer, wherein
- the light source is arranged inside the housing and
- the housing comprises light absorbing surfaces.

As mentioned, the color of the structural color layer is best controlled when the absorption of the absorbing layer is as high as possible. In many cases, the light sources are arranged in alignment with openings of the absorbing layer. The homogeneous absorption is interrupted by the openings such that the area around the openings may have an appearance different from the remaining component in particular when the light source is switched off. The arrangement of the light source inside the housing having an absorbing surface minimizes the interruption of the absorption caused by the openings and contributes to a homogeneous appearance of the component. Moreover, illumination optics as mentioned earlier may be arranged inside the housing.

According to another embodiment the light source is integrated into the light absorbing layer or forms the light absorbing layer. The light source can be formed by one or more OLEDs (organic light emitting diodes), AMOLEDs (active matrix organic light emitting diodes), miniLEDs or microLEDs. As in this embodiment the light source is integrated into the light absorbing layer or forms the same, no separate light source located distantly from the carrier body is needed. In particular in case of OLEDs and AMOLEDs no illumination optics are needed. The component can thus be made compact and needs only a limited amount of constructional space. Optionally, an anti-reflective layer can be arranged between the structural layer and the light absorbing layer.

Another aspect of the invention is directed to a vehicle comprising an illuminated or illuminable component according to one of the embodiments previously discussed. Moreover, another aspect of the invention is drawn to the use of an illuminated or illuminable component according to one of the embodiments previously discussed in automotive applications. The technical effects and advantages as discussed with regard to the present component to a large extent equally apply to the vehicle or the use in automotive applications. One particular effect to mention is that the color shift of the light generated by the light source of the component and exiting the component is small. As a result, the desired color of the light that is perceptible from outside can be provided with minimal correction. Typically, only one light source is sufficient for this purpose. No complex mixing of lights of a plurality of light sources each of which of different color is necessary. The component and thus also the vehicle can operate with less complexity and higher efficiency.

### PREFERRED EMBODIMENTS OF THE INVENTION

The present invention is described in detail with reference to the drawings attached wherein
- Figure 1: shows a first embodiment of an illuminated or illuminable component known from the prior art,
- Figure 2: shows a second embodiment of a component known from the prior art,
- Figure 3A: shows a first embodiment of a component according to the present invention,
- Figure 3B: shows a second embodiment of a component according to the present invention,
- Figure 4: shows a third embodiment of a component according to the present invention,
- Figure 5: shows a fourth embodiment of a component according to the present invention,
- Figure 6: shows a fifth embodiment of a component according to the present invention,
- Figure 7: shows a sixth embodiment of a component according to the present invention,
- Figure 8A: shows a seventh embodiment of a component according to the present invention in a first position,
- Figure 8B: shows the seventh embodiment of Figure 8A in an second position,
- Figure 9A: shows an eighth embodiment of a component according to the present invention in which the light source is switched off,
- Figure 9B: shows the eighth embodiment of Figure 9A in which the light source is switched on,
- Figure 10A: shows a ninth embodiment of a component according to the present invention in which the light source is switched off,
- Figure 10B: shows the ninth embodiment of Figure 10A in which the light source is switched on,
- Figure 11A: shows a tenth embodiment of a component according to the present invention in which the light source is switched off,
- Figure 11B: shows the tenth embodiment of Figure 11A in which the light source is switched on,
- Figure 12A: shows an eleventh embodiment of a component according to the present invention in which the light source is switched off,
- Figure 12B: shows the eleventh embodiment of Figure 12A in which the light source is switched on,
- Figure 13A: shows a twelfth embodiment of a component according to the present invention in which the light source is switched off,
- Figure 13B: shows the twelfth embodiment of Figure 13A in which the light source is switched on,
- Figure 14A: shows a thirteenth embodiment of a component according to the present invention in which the light source is switched off,
- Figure 14B: shows the thirteenth embodiment of Figure 14A in which the light source is switched on, and
- Figure 15A: shows a fourteenth embodiment of a component according to the present invention in which the light source is switched off,
- Figure 15B: shows the fourteenth embodiment of Figure 15A in which the light source is switched on,
- Figure 16: shows a fifteenth embodiment of a component according to the present invention, and
- Figure 17: shows a vehicle that is equipped with a plurality of components according to one or more of the embodiments mentioned above.

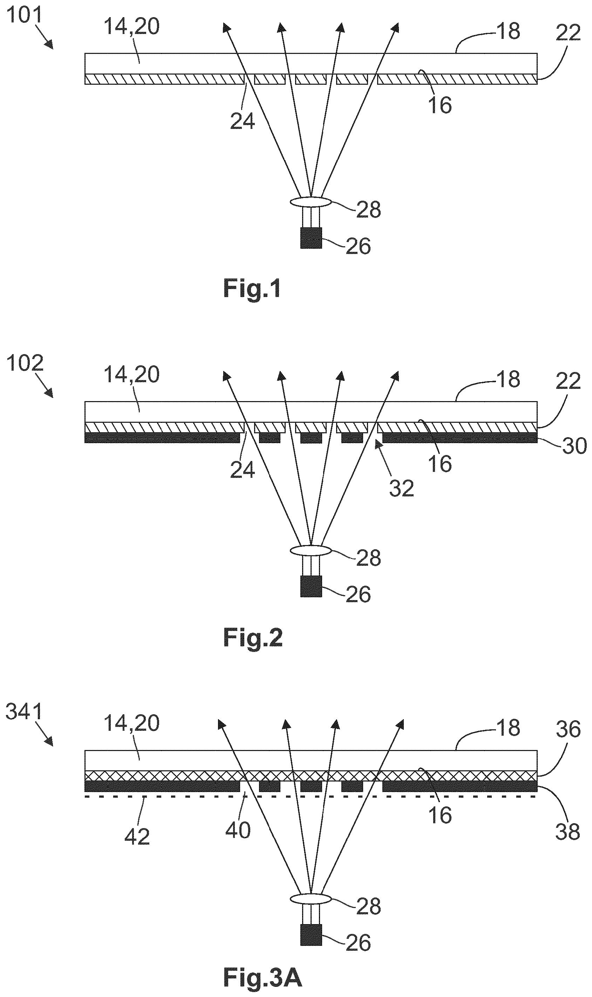

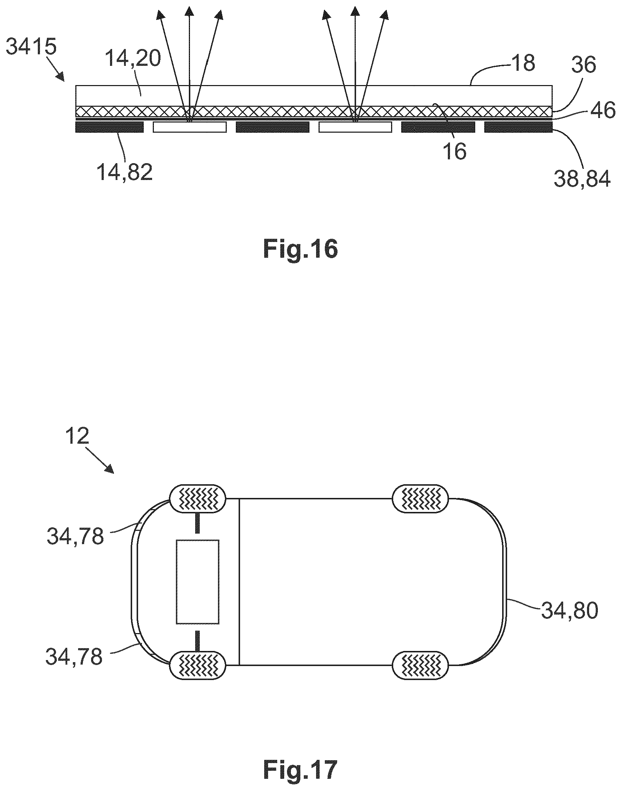

Figure 1 shows an illuminated or illuminable component 101 of or for a vehicle 12 (see Figure 17) known from the prior art by means of a principle drawing. The component 101 comprises a carrier body 14 having a first surface 16 and a second surface 18. In many embodiments the carrier body 14 is a cover lens 20, the first surface 16 of which faces to the interior of the component 101 while the second surface 18 is part of the outer surface of the component 101. The carrier body 14 is made of a transparent material, such as a transparent plastic or transparent resin.

A color layer 22 is applied to the first surface 16 and comprises a plurality of thin openings 24. Moreover, the component 101 comprises a light source 26 which provides light. Illumination optics 28 are arranged between the light source 26 and the carrier body 14.

Figure 2 shows a second embodiment of the component 102 known from the prior art. Its basic design is to a large extent similar to the first embodiment shown in Figure 1, however, it further comprises an opaque masking layer 30 applied on the free surface of the color layer 22, i.e., the surface facing the light source 26. The masking layer 30 is applied such that the openings 24 of the color layer 22 remain uncovered by the masking layer 30. The openings 24 may be arranged in a pattern to represent a brand logo of the vehicle 12 manufacturer or to define an area of the second surface 18 that should be illuminated. The openings 24 also serve for hiding the light source 26 and other units of the component 102 such that they are not visible from outside.

The color layer 22 imposes a certain color to the component 101 which is perceptible from outside. This color may be the same as or similar to the color of the vehicle 12.

The light provided by the light source 26 exits the component 101 via the openings 24. However, when penetrating the openings 24 some of the light rays pass through the color layer 22 such that the color of the light that exits the component 101 and is perceptible from outside differs from the initial color of the light provided by the light source 26. In many cases, the color of the light has to fulfil certain legal requirements. As an example, the light of a direction indicator light needs to be amber-colored, the brake light and the backlight are red-colored, while the reversing light is white. Due to the color shift, fairly complex color correction measures need to be employed which increase the manufacturing costs of the component 101.

Another issue can be derived from Figure 2. When the opaque masking layer 30 is applied to the color layer 22, it would be desirable that the openings 24 are aligned with each other to obtain an appealing appearance of the illuminated area. However, such an alignment is almost impossible or requires an extraordinarily high manufacturing effort. To avoid that the masking layer 30 extends into the openings 40 or even closes the openings 24 of the color layer 22, the masking layer 30 is applied with a certain offset 32 relative to the openings 24 of the color layer 22. This, however, is negatively influencing the contrast and the definition of the illuminated area of the second surface 18.

Figure 3A shows a first embodiment of a component 341 of or for a vehicle 12 according to the present invention. The component 341 also comprises the already mentioned carrier body 14, however, a structural color layer 36 is coherently applied to the first surface 16 without forming openings 40. The structural color layer 36 comprises a physical structure, for example provided by photonic crystals which may be embedded into the structural color layer 36 by an appropriate matrix. Photonic crystals have physical structures on the scale of the wavelength of light, with varying refractive index. Moreover, the structural color layer 36 comprises an ink and/or color pigments. Neither the photonic crystals nor the matrix or the ink or the color pigments are explicitly shown.

Moreover, an at least partially light absorbing layer 38 is applied on the structural color layer 36. In the first embodiment, the light absorbing layer 38 is applied on the surface of the structural color layer 36 that is facing the light source 26. The light absorbing layer 38 is forming openings 40 that can be penetrated by the light provided by the light source 26.

A diffusive layer 42 is applied on the surface of the light absorbing layer 38 that is directed towards the light source 26. The diffusive layer 42 mainly homogenizes the light distribution and helps hide the light source 26 and other components of the component 341.

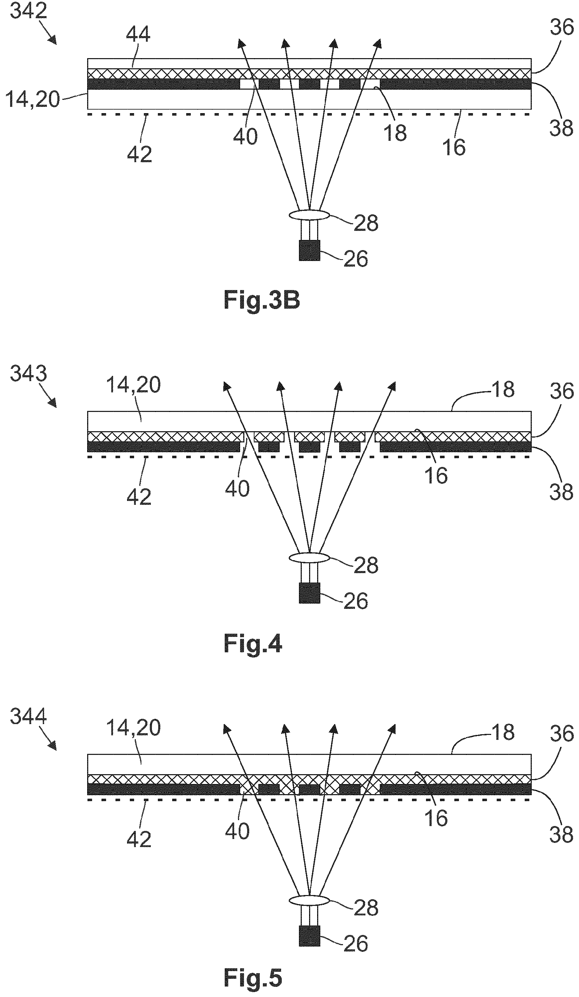

Figure 3B shows a second embodiment of the component 342 according to the invention. The design of the second embodiment of the component 342 is largely similar to the first embodiment of the component 341, however, the light absorbing layer 38 is applied to the second surface 18 of the carrier body 14. The structural color layer 36 is applied to the surface of the light absorbing layer 38 facing away from the light source 26.

As previously mentioned, the second surface 18 of the carrier body 14 is typically part of the outer surface of the component 342 and thus exposed to the exterior of the vehicle 12. The component 342 according to the second embodiment is therefore equipped with a protective layer 44, e.g., a hard-coat or the like applied to the surface of the structural color layer 36 facing away from the light source 26.

The diffusive layer 42 is applied directly to the first surface 16 of the carrier body 14. However, it should be noted that the diffusive layer 42 may also be provided by a separate component or can be placed at a different position. For example, the diffusive layer 42 may be directly applied to the first surface 16 of the carrier body 14.

The remaining design of the component 341, 342 is the same as described for the prior art embodiments shown in Figures 1 and 2.

The physical structures of the structural color layer 36 reflect specific wavelengths and absorb and transmit the rest. When looking at the component from outside, for example the daylight which is impinging on the structural layer 36 is only partially reflected in a first color. The absorbing layer 38 prevents the remaining part of the daylight from being reflected. The more absorptive the light absorbing layer 38 is, the closer is the color of the light reflected by the structural color layer 36 to the first color provided by the physical structures. It is therefore advisable to provide the absorbing layer as an opaque black layer. The structural color layer 36 may be provided with color pigments to enhance this effect.

In contrast to that, the color of the transmitted light does not adopt the second color of the reflected light but is only minimally shifted away from the initial first color.

Due to these properties, the component 341 can be operated as follows: When the light source 26 is switched on, as shown in Figures 3A and 3B, the light runs through the openings 40 of the light absorbing layer 38 and is then penetrating the structural color layer 36. In case of the first embodiment shown in Figure 3A, the light then crosses the carrier body 14 and leaves the component 341 via the second surface 18. In case of the second embodiment shown in Figure 3B, the light exits the component 342 via the protective layer 44.

The color shift imposed on the light upon penetrating the structural layer is small and almost negligible. Only little effort is necessary to correct the color shift, e.g., in case the color of the light leaving the component 341 needs to fulfill certain legal requirements.

When the light source 26 is switched off (not shown), the ambient light coming from outside and impinging on the structural color layer 36 is reflected by the structural color layer 36 adopting its color. It is therefore not necessary to provide the structural color layer 36 with openings 40 as necessary in the first and second embodiments of the prior art shown in Figures 1 and 2.

Figure 4 shows a third embodiment of a component 343 and Figure 5 shows a fourth embodiment of a component 345 according to the present invention which almost have the same design and can be largely operated in the same way as described for the first embodiment of the inventive component 341 shown in Figure 3A. Although not necessary for the reasons explained above, the structural color layer 36 can be provided with openings 40 as is the case for the third embodiment of the component 343 shown in Figure 4. In the fourth embodiment shown in Figure 5, the structural color layer 36 extents into the openings 40 of the light absorbing layer 38 which may facilitate the application of the structural color layer 36 to the light absorbing layer 38. It should be noted that the number and the size of the openings 40 can be freely varied. In particular, the openings 30 may have the form of a slit (not shown).

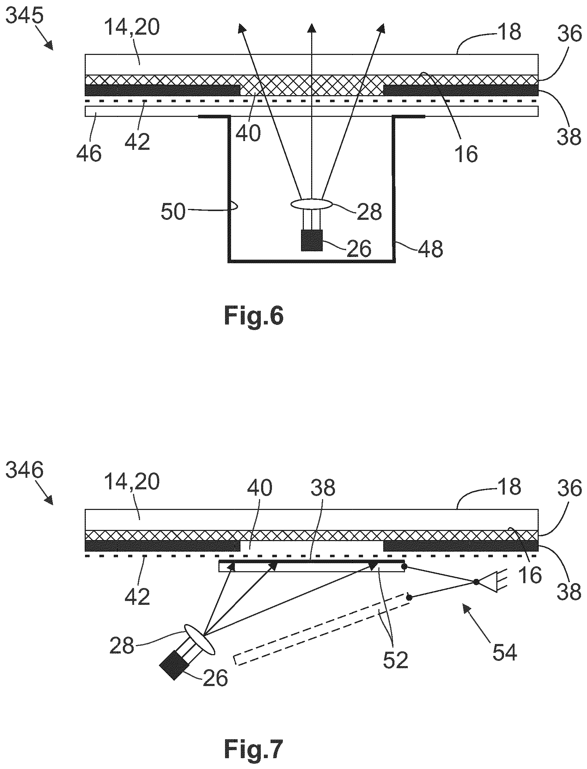

Figure 6 shows a fifth embodiment of the component 345 the design of which is similar to the fourth embodiment of the component 344 shown in Figure 5. However, the light absorbing layer 38 forms one coherent and relatively big opening 40 instead of a plurality of thin openings 40.

Additionally, an anti-reflective layer 46 is applied on the diffusive layer 42. However, the anti-reflective layer 46 may also be arranged in different positions. The anti-reflective layer 46 minimizes disturbing effects of the ambient light on the illumination of the component 345.

Moreover, a housing 48 is connected to the anti-reflective layer 46, wherein the housing 48 encloses the light source 26 and the Illumination optics 28. The housing 48 is provided with light absorbing surfaces 50. The light absorbing surfaces 50 are those surfaces that face the light source 26, i.e., the inner surfaces of the housing 48. However, the housing 48 may also be directly attached to the diffusive layer 42 or the light absorbing layer 38. The anti-reflective layer 46 may only be applied inside the housing 48 thereby keeping its size small.

As mentioned, the light absorbing layer 38 forms one coherent opening 40 which is significantly bigger than the openings 40 of the previously described embodiments of the component 341 - 344 according to the invention. As mentioned before, the degree of absorption influences the color of the light reflected by the structural color layer 36. The higher the degree of absorption, the closer the color of the reflected light to the color of the pigments or ink embedded to the structural color layer 36. Due to the fairly big opening 40 formed by the light absorbing layer 38 in the fifth embodiment, the color of the reflected ambient light in the area of the opening 40 may be different from the color of the ambient light reflected in other parts of the components. The opening 40 may thus be recognizable from outside and the homogeneity of the color impaired. The light absorbing surfaces 50 of the housing 48 at least partially compensate for the missing absorption of the light absorbing layer 38 inside the opening 40, thereby improving the color homogeneity of the reflected ambient light.

Figure 7 shows a sixth embodiment of the component 346. As in the fifth embodiment, the light absorbing layer 38 forms a coherent and relatively big opening 40. The component 346 is equipped with a shutter body 52 that can be moved between a first position and an second position by a moving mechanism 54. In the first position the opening 40 is covered by the shutter body 52 such that the light provided by the light source 26 cannot penetrate the opening 40. In contrast to that, the openings 40 are cleared for the light provided by the light source 26 when the shutter body 52 is in the second position.

The light absorbing layer 38 is not only applied on the structural color layer 36 but also on the shutter body 52. In the first position the light absorbing layer 38 of the shutter body 52 is positioned adjacent the opening 40. As a result, the opening 40 is covered by the light absorbing layer 38 of the shutter body 52. The homogeneity of the ambient light reflected by the component 346 is increased such that the opening 40 is hardly recognizable from outside. It may also be possible to provide the shutter body 52 with a light absorbing material which may be the same as the one used for the light absorbing layer 38 or may differ. Moreover, the light absorbing layer 38 or the entire shutter body 52 may be made of a deformable or malleable material. In this case, the shutter body 52 can contact the diffusive layer 42 (or depending on the embodiment other adjacently arranged surfaces of the carrier body 14) in the first position such that no air gaps remain between the shutter body 52 and the carrier body 14.

To enable the movement of the shutter body 52 between the second position and the first position, the light source 26 and the Illumination optics 28 are not arranged in alignment with the opening 40 but displaced hereto.

Although not necessary, the light source 26 can be switched on and off according to the position of the shutter body 52. As soon as the shutter body 52 reaches the first position the light source 26 may be switched off. The light source 26 may be switched on as soon as the shutter body 52 is moved out of the first position towards the second position.

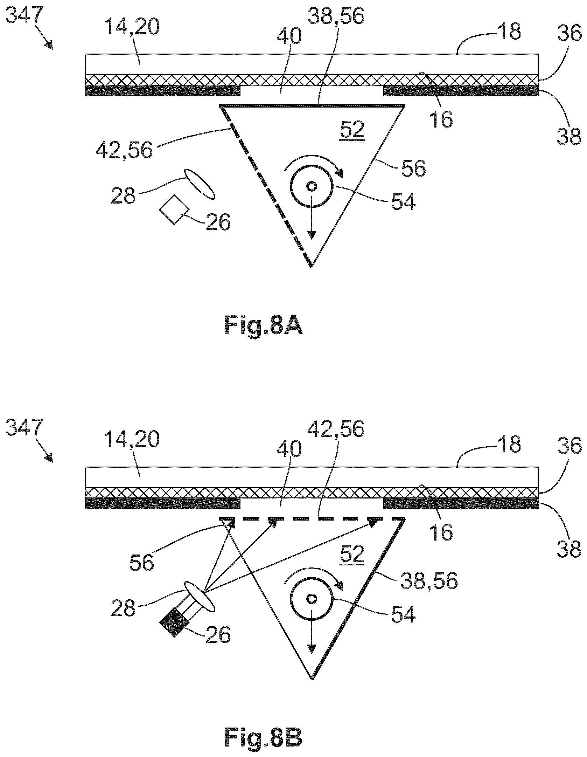

Figures 8A and 8B show a seventh embodiment of the component 347 according to the invention. As in the sixth embodiment of the component 346, the component 347 according to the seventh embodiment is equipped with a shutter body 52 which in this case has a triangular cross section and thus forms three planar surfaces 56. Other cross-sectional shapes of the shutter body 52 are also conceivable, such as a rectangular or circular cross section. The cross section should match the shape of the carrier body 14 such that the course of the surface or surfaces of the shutter body 52 and the carrier body 14 correspond to each other. The shutter body 52 is made of a transparent material, in particular of a transparent polymer or transparent plastic.

A light absorbing layer 38 is applied on one of the planar surfaces 56 while on one of the other planar surfaces 56 the diffusive layer 42 is applied. The shutter body 52 is rotatably mounted inside the component 347. In Figure 8A the shutter body 52 is in the first position in which the light absorbing layer 38 covers the opening 40 such that the homogenizing effect on the reflected ambient light as previously described is obtained. The light source 26 is switched off. In Figure 8B the shutter body 52 is rotated into the second position in which the opening 40 is covered by the diffusive layer 42. The light source 26 is now switched on. As previously mentioned, the diffusive layer 42 mainly homogenizes the light distribution and helps hiding the light source 26 and other components of the component 347. However, it also reflects some of the ambient light thereby imposing a disturbing effect on the homogeneity of the color of the reflected ambient light in the area of the opening 40. In the seventh embodiment, this disturbing effect is eliminated as the diffusive layer 42 is only arranged adjacent the opening 40 when the light source 26 is switched on (Figure 8B). When the light source 26 is switched off (Figure 8A), the diffusive layer 42 is arranged at distance from the opening 40 and cannot reflect the ambient light as the opening 40 is covered by the light absorbing layer 38.

As noted, the shutter body 52 in the seventh embodiment has a triangular cross section. To enable the rotation between the open and the first position such that the light absorbing layer 38 and the diffusive layer 42 can be arranged adjacent the opening 40, the moving mechanism 54 also provides a lateral movement of the shutter body 52 away from and towards the carrier body 14. In the first position and the second position the shutter body 52 may contact the carrier body 14 such that no air gaps between the shutter body 52 and the carrier body 14 remain. As also mentioned, the shutter body 52 has three planar surfaces 56. However, when the carrier body 14 has a certain curvature, the surfaces of the shutter body 52 can be adopted such that they follow the curvature of the carrier body 14.

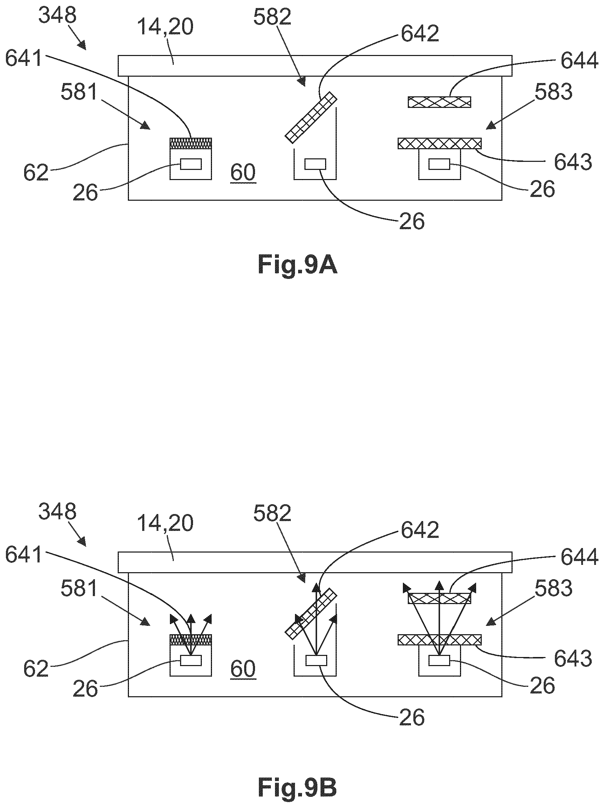

Figures 9A and 9B show an eighth embodiment of the inventive component 348. The component 348 according to the eighth embodiment comprises in a first module 581, a second module 582 and a third module 583 which are arranged inside a hollow space 60 that is delimited by a housing wall 62 and a carrier body 14. Each of the three modules 581 - 583 comprises its own light source 26. The structural color layer 36 forms a first section 641 of a first color arranged on the first module 581, a second section 642 of a second color arranged on the second module 582, a third section 643 of a third color and a fourth section 644 of a fourth color, both arranged on the third module 583. It is thus possible to define different areas within the second surface 18 of the carrier body 14 having different colors. This may be the case in a lighting unit arranged on the back of a vehicle 12. This lighting unit may comprise the direction indicator light which is amber-colored, the brake light and the backlight which are red-colored, and the white reversing light. These colors refer to the light leaving the component 348 when the light sources 26 are switched on. The light absorbing layers 38 are not shown for the sake of clarity but may be provided as shown in Figure 3A.

As noted above, the color of the reflected ambient light is determined by the color of the structural color layer 36 itself. The sections 641 - 644 of the structural color layer 36 at the modules 581 - 583 have different colors so the ambient light is reflected in different colors around the modules. It is thus possible to provide the component 348 with many colors when one or more of the light sources 26 are switched off while maintaining the functions mentioned above such as the direction indicator. As an example, the area around the module providing the amber-colored light for the direction indicator may be green when the light source 26 of the respective light is switched off, however is amber-colored when the light source 26 is switched on upon activating the indicator.

It is worth noting that the third module 583 comprises two sections 643, 644 of the structural color layer 36 arranged on top of each other. While the initial color of the light provided by the light source 26 of the third module is hardly changed, the color of the reflected ambient light is the result of the mix of the colors of each of the structural color layers 36. The color range of the reflected ambient light can hereby be extended.

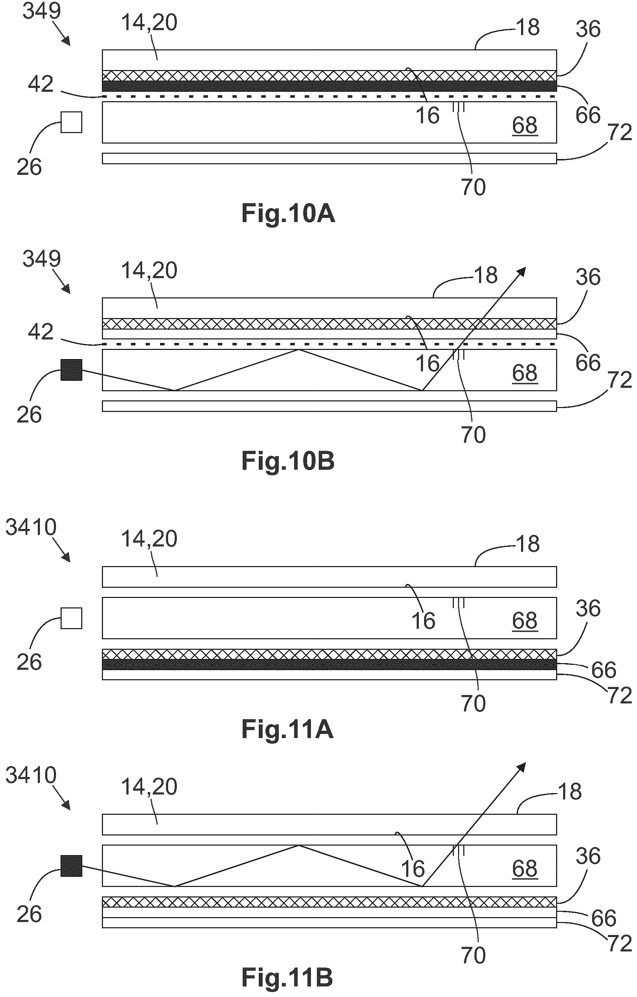

Figures 10A and 10B show a ninth embodiment of the component 349. As in the other embodiments previously discussed, the component 349 according to the nineth embodiment comprises the carrier body 14 with the structural color layer 36 applied on the first surface 16. In this case the light absorbing layer 38 is provided by an absorption adjustment unit 66 arranged on the structural color layer 36. The diffusive layer 42 is applied on the absorption adjustment unit 66. By the absorption adjustment unit 66, sometimes also referred to as "smart glass", areas can be defined the translucence and thus the absorption of which can be changed.

Moreover, the component 349 is equipped with a light guide 68 into which the light provided by the light source 26 can be introduced. The light source 26 may be located remote from the carrier body 14.

Moreover, a reflective layer 72 is provided on the side of the light guide 68 opposite the carrier body 14. The light guide 68 comprises outcoupling elements 70 which may be arranged on the surface of or inside the light guide 68. Light provided by the light guide 68 and introduced into the light guide 68 can only exit the light guide 68 in the area of the outcoupling elements 70.

The component 349 according to the ninth embodiment is operated as follows: In Figure 10A the light source 26 is switched off and the absorption adjustment unit 66 in a state of minimum translucence, i.e., maximum absorbance, preferably as black as possible. The ambient light is reflected in the color of the structural color layer 36. In Figure 10B the absorption adjustment unit 66 is turned into a state of maximum translucence, preferably as transparent as possible. The light source 26 is switched on. The light is inserted into the light guide 68 and stays in there until it hits one of the outcoupling elements 70 where it exits the light guide 68. It penetrates the diffusive layer 42, the absorption adjustment unit 66, the structural color layer 36 and the carrier body 14 before it exits the component 349 via the second surface 18. The color of the light exiting the component 349 is almost the same as the one when leaving the light source 26.

As noted, the reflective layer 72 is provided on the side of the light guide 68 opposite the carrier body 14. In case of some light leakage of the light guide 68, the light leaving the light guide 68 is reflected back to the light guide 68 and does not get lost. The reflective layer 72 is preferably of white color.

In Figures 11A and 11B a tenth embodiment of the component 3410 is shown. Its design is to a large extent the same as explained for the ninth embodiment of the component 349. However, the absorption adjustment unit 66 and the structural color layer 36 are applied on the reflective layer 72 on the side of the light guide 68 opposite the carrier body 14. The reflective layer is preferably white or at least of high brightness.

In Figure 11A the light source 26 is switched off and the absorption adjustment unit 66 turned into a state of maximum absorbance. The ambient light is homogeneously reflected in the color of the structural color layer 36.

In Figure 11B the light source 26 is switched on and the absorption adjustment unit 66 turned into a state of maximum translucence. As previously noted, the reflective layer 72 is typically white or at least of high reflectivity. The color of the ambient light hitting the structural color layer 36 is only reflected in white or almost white. The initial color of the light provided by the light source 26 will only slightly shifted to a paler tinge which is, however, almost negligible and may be easy to compensate.

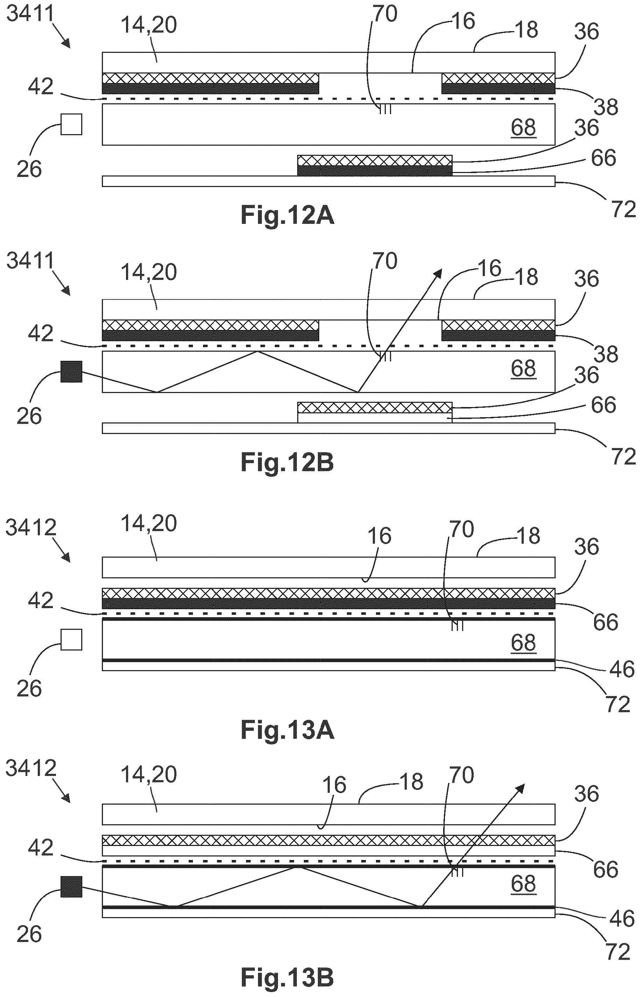

In Figures 12A and 12B an eleventh embodiment of the component 3411 is shown. The structural color layer 36 is applied on the first surface 16 of the carrier body 14. Moreover, the light absorbing layer 38 is applied to the structural color layer 36. The structural color layer 36 and the light absorbing layer 38 form an opening 40. In the area of the opening 40 and on the opposite side of the light guide 68 a absorption adjustment unit 66 is applied on the reflective layer 72. A structural color layer 36 is applied on the surface of the absorption adjustment unit 66 facing towards the opening 40.

In Figure 12A the light source 26 is switched off and the absorption adjustment unit 66 turned into a state of maximum absorbance. The ambient light is homogeneously reflected also around the opening 40. In Figure 12B the light source 26 is switched on and the absorption adjustment unit 66 turned into a state of maximum translucence. The effect on the ambient light and the light provided by the light source 26 are the same as described for the tenth embodiment of the component 3410.

In Figures 13A and 13B a twelfth embodiment of the component 3412 is shown. The design is to a large extent similar to the design of the component 349 according to the ninth embodiment shown in Figures 10A and 10B. However, an anti-reflective layer 46 is applied to the light guide 68. The anti-reflective layer 46 minimizes disturbing effects of the ambient light on the illumination of the component 3412. It is therefore possible to apply the reflective layer 72 and the diffusive layer 42 directly to the light guide 68.

While in the ninth to eleventh embodiment of the component 349 - 3411 the absorption adjustment unit 66 and the structural color layer are directly applied to the carrier body 14, in the twelfth embodiment of the component 3412 a gap is formed between the structural color layer 36 and the carrier body 14. The structural color layer 36 is directly applied to the absorption adjustment unit 66. The diffusive layer 42 and the carrier body 14 may be omitted and replaced by a layer of hard-coat or PUR (polyurethane). The absorption adjustment unit 66 can only be placed on areas to be illuminated, in other areas, the structural color layer 36 can be combined with the light absorbing layer 38 underneath. Both can be placed on a clear foil or plate for easier application.

Apart from that, the operation of the component 3412 of the twelfth embodiment is the same as described for the ninth embodiment.

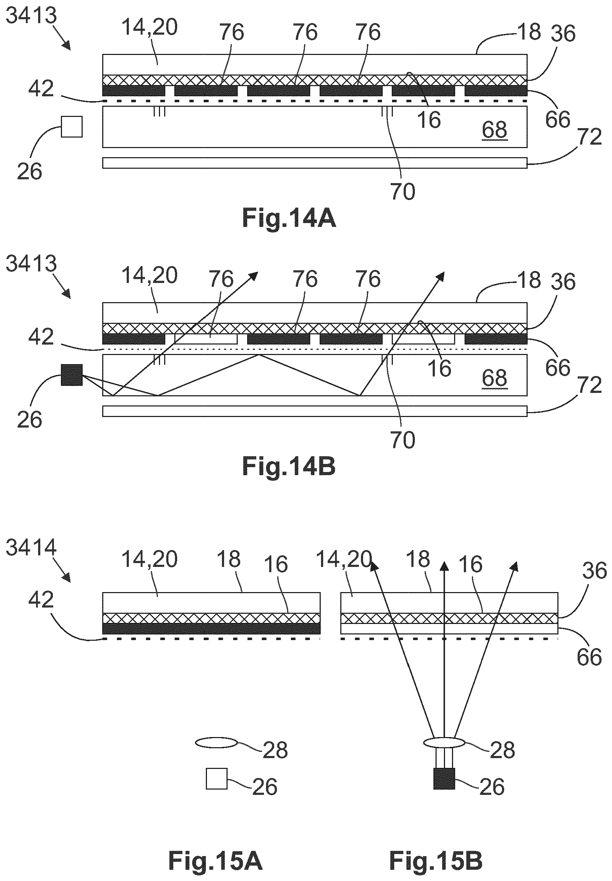

In Figures 14A and 14B a thirteenth embodiment of the component 3413 is shown. Again, the design is to a large extent similar to the design of the component 349 according to the ninth embodiment (see Figures 10 A and 10B). However, the absorption adjustment unit 66 is subdivided into a plurality of sub-units 76 which can be switched between the state of maximum translucence and minimum translucence independently from each other. As noted before, the light provided by the light source 26 can only penetrate the absorption adjustment unit 66 to a notable degree when it is turned into the state of maximum translucence. By switching the sub-units 76 independently from each other between the two states, certain symbols or animations may be created that are visible from outside the component 3413.

Figures 15A and 15B show a fourteenth embodiment of the component 3414. As in the ninth embodiment, the structural color layer 36 is applied to the first surface 16 of the carrier body 14. The absorption adjustment unit 66 is arranged on the surface of the structural color layer 36 facing away from the carrier body 14. In contrast to the ninth embodiment, the component 349 according to the fourteenth embodiment does not comprise a light guide 68. Instead, the light source 26 and the Illumination optics 28 are arranged as in the first embodiment shown in Figure 3A.

Not shown is an embodiment in which the component 34 comprises a low-refractive index layer which may be arranged at least between the carrier body and the light guide. The low-refractive index layer may be applied on the structural color layer, however, other arrangements are possible. More than one low-refractive index layers may be provided.

In Figure 15A the light source 26 is switched off and the absorption adjustment unit 66 turned into the state of minimum translucence or maximum absorption. The ambient light impinging on the structural color layer 36 is reflected according to the color of the structural color layer 36.

In Figure 15B the light source 26 is turned on and the absorption adjustment unit 66 turned into a state of maximum translucence. The light generated by the light source 26 is penetrating the absorption adjustment unit 66, the structural color layer 36 and the carrier body 14 with minimal color shift.

Figure 16 shows a fifteenth embodiment of the component 3415. The structural color layer 36 is applied to the first surface 16 of the carrier body 14. An anti-reflective layer 46 is applied to the structural color layer 36. The light source 14 comprises a number of light sub-units 82 which may be embodied as OLEDs, AMOLEDs, mini-LEDs or micro-LEDs which are connected to the anti-reflective layer 46 and are part of an intensity adjustment unit 84. In an embodiment not shown, the component 3415 is not provided with an anti-reflective layer 46 and the source 14 is directly connected to the structural layer 36. The light sub-units 82 of the light source 14 can be switched on and off independently from each other. In Figure 16, two of the light sub-units 82 are switched on while the others are switched off. The respective power supply and the switches are not shown. When switched off, the light sub-units 82 provide a minimum brightness. In particular OLEDs, AMOLEDs have a black or very dark color when switched-off leading to high absorption such that they are hardly recognizable from outside. Therefore, in particular in case of OLEDs and AMOLEDs no illumination optics 38 are necessary.

Figure 17 shows a principle top view of a vehicle 12 that is equipped with a plurality of components according to one of the embodiments previously presented. One component 34 is embodied as a head lamp 78 whereas another component 34 is embodied as a rear display panel 80. Not shown is an example in which the vehicle 12 is equipped with components that are embodied as B-pillars, door panels or the like.

### REFERENCE LIST

- 101, 102: component according to the prior art
- 12: vehicle
- 14: carrier body
- 16: first surface
- 18: second surface

- 20: cover lens
- 22: color layer
- 24: opening
- 26: light source
- 28: illumination optics

- 30: masking layer
- 32: offset
- 34, 341 - 3415: component according to the invention
- 36: structural color layer
- 38: light absorbing layer

- 40: opening
- 42: diffusive layer
- 44: protective layer
- 46: anti-reflective layer
- 48: housing

- 50: light absorbing surface
- 52: shutter body
- 54: moving mechanism
- 56: planar surface
- 581 - 583: modules

- 60: hollow space
- 62: housing wall
- 641 - 642: sections
- 66: absorption adjustment unit
- 68: light guide

- 70: outcoupling elements
- 72: reflective layer
- 76: sub-units
- 78: head lamp

- 80: rear display panel
- 82: light sub-unit
- 84: intensity adjustment unit

## Claims

1. Illuminated or illuminable component (34), comprising
- one or more light sources (26) for providing light,
- a carrier body (14) having a first surface (16) and a second surface (18) opposite the first surface (16),
- the first surface (16)
∘ facing the light source (26), or
∘ being the surface on which the light provided by the light source (26) first impinges before penetrating the carrier body (14),
- a structural color layer (36) comprising a physical structure influencing the color of the light interacting with the structural color layer (36) and
∘ applied to the first surface (16) and/or the second surface (18) or
∘ arranged inside the component (34) such that the light generated by the light source (26) interacts with the structural color layer (36) before penetrating the carrier body (14).

2. Illuminated or illuminable component (34) according to claim 1,
**characterized in that**
the component (34) comprises an at least partially light absorbing layer (38) which
- is applied on the structural color layer (36) or vice versa or
- interacts with the structural color layer (36).

3. Illuminated or illuminable component (34) according to one of the claims 1 or 2, **characterized in that**
- the light absorbing layer (38) or
- the structural color layer (36) and the light absorbing layer (38) comprise openings (40) illuminated or illuminable by the light provided by the light source (26).

4. Illuminated or illuminable component (34) according to claim 3,
**characterized in that** a shutter body (52) is provided,
- on which the light absorbing layer (38) is applied or which is formed by the light absorbing layer (38) or which is made of a light absorbing material, and
- which is movable by a moving mechanism (54) between
∘ a first position in which the shutter body (52) is arranged adjacent to or in contact with the openings (40) and
∘ a second position in which light provided by the light source (26) can penetrate the openings (40).

5. Illuminated or illuminable component (34) according to claim 4,
**characterized in that** the shutter body (52) is rotatably supported in the component (34) and can be rotated between the first position and the second position.

6. Illuminated or illuminable component (34) according to one of the preceding claims, **characterized in that** the structural color layer (36) comprises color pigments or an ink.

7. Illuminated or illuminable component (34) according to claim 6,
**characterized in that** the structural color layer (36) comprises at least a first section (641) of a first color and at least a second section (642) of a second color.

8. Illuminated or illuminable component (34) according to one of the claims 2 to 7, **characterized in that** the light absorbing layer (38) comprises an absorption adjustment unit (66) and/or an intensity adjustment unit (84).

9. Illuminated or illuminable component (34) according to claims 3 and 7,
**characterized in that** the absorption adjustment unit (66) and the structural color layer (36) are arranged inside the component (34) such that they are flush with or overlap the openings (40).

10. Illuminated or illuminable component (34) according to one of the preceding claims, **characterized in that** the component (34) comprises a light guide (68)
- into which the light provided by the light source (26) can be coupled and
- comprising outcoupling elements (70) which are arranged such that the light is leaving the light guide (68) via the outcoupling elements (70).

11. Illuminated or illuminable component (34) according to one of the preceding claims, **characterized in that** the carrier body (14) is a cover lens (20) made of transparent resin.

12. Illuminated or illuminable component (34) according to one of the preceding claims, **characterized in that** a diffusive layer (42) is arranged such that the light generated by the light source (26) interacts with the diffusive layer (42) before penetrating the carrier body (14).

13. Illuminated or illuminable component (34) according to one of the preceding claims, **characterized in that** an anti-reflective layer (46) is arranged on the first surface (16) of carrier body (14) or on the structural color layer (36).

14. Illuminated or illuminable component (34) according to one of the claims 10 to 13, **characterized in that** a low-refractive index layer is arranged at least between the carrier body (14) and the light guide (68).

15. Illuminated or illuminable component (34) according to one of the preceding claims, **characterized in that** an illumination optics (28) is arranged between the light source (26) and the carrier body (14).

16. Illuminated or illuminable component (34) according to one of the preceding claims, **characterized in that** a housing (48) is connected to the carrier layer, wherein
- the light source (26) is arranged inside the housing (48) and
- the housing (48) comprises light absorbing surfaces (50).

17. Illuminated or illuminable component (34) according to claim 2,
**characterized in that** the light source (14)
- is integrated into the light absorbing layer (38) or
- forms the light absorbing layer (38).

18. Vehicle (12), comprising an illuminated or illuminable component (34) according to one of the preceding claims.
